# EUROPEAN PATENT SPECIFICATION

(11) **EP 3 035 188 B1**
(45) Date of publication and mention of the grant of the patent: **30.12.2020**
(21) Application number: 15196356.8
(22) Date of filing: 25.11.2015
(51) Int. Cl.: G06F 7/48, G06F 7/499

(54) **FIXED-POINT MULTIPLICATION BY ONE**
MUTLIPLITIZIERUNG IN FIXPUNKT MIT DEM WERT EINS
MULTIPLICATION EN POINT FIXE AVEC LA VALEUR "UN"

(30) Priority: 25.11.2014 GB 201420890
(43) Date of publication of application: 22.06.2016
(73) Proprietor: AptCore Ltd, Bristol BS1 6QH (GB)
(72) Inventor: WILDMAN, Leon, Bristol, Bristol BS1 6QH (GB); STYLES, Timothy, Bristol, Bristol BS1 6QH (GB)
(74) Representative: Gillard, Matthew Paul

(56) References cited:
- EP-A1- 0 992 883
- US-A- 5 422 805
- US-A1- 2012 157 008
- ROBERT KOUTSOYANNIS ET AL: "Improving fixed-point accuracy of FFT cores in O-OFDM systems", ICASSP 2012, 25 March 2012 (2012-03-25), pages 1585-1588, XP032227436, IEEE, PISCATAWAY, NJ, USA DOI: 10.1109/ICASSP.2012.6288196 ISBN: 978-1-4673-0045-2

## Description

### Technical Field

The present invention relates to signal processing apparatus.

### Background to the Invention

Digital Signal Processing is a key component in many of today's high technology products, such as digital communications equipment and sensor array processors. The performance required from Digital Signal Processors (DSPs) continues to increase while constraints on power and cost remain tight. These requirements are often met by the use of Single Instruction, Multiple Data (SIMD) processors, which process multiple data values in parallel.

DSP devices are typically required to perform matrix math operations, complex arithmetic operations and Fast Fourier Transform (FFT) calculations. These operations can be efficiently performed using a SIMD processor, with multiple processor units performing the same operation on different data values in parallel. The instruction stream and control logic are shared by the processor units resulting in an efficient system, but the data bandwidth remains proportional to the number of data values being processed. When the data values are processed with different constant values, such as FFT coefficients or filter coefficients, the bandwidth required to supply the constant values is also proportional to the number of data values being processed in parallel.

Typically input data to be processed by a DSP is stored in a register file, which is an area of physical memory in the DSP that is reserved for such data. The data is typically loaded into the register file from an external data memory and read from the register file by the DSP when required. The DSP writes output data to the register file when a processing operation has been performed on the input data or, in some cases, as the processing operation is performed.

The number format used in the processing unit(s) and the register file of a DSP is typically a fixed point m.n format, where m represents the number of bits reserved for the integer portion of a stored number, and n represents the number of bits reserved for the fractional portion of the number.

The number format used by the data memory is also typically a fixed point m.n format, but due to block scaling operations that may be performed by the DSP, the number of bits reserved for the integer portion of the stored number in the number format used by the data memory may be lower than the number of bits reserved for the integer portion of the stored number in the processing unit(s) and the register file. For example, the data memory may use a number format 1.n in signed two's complement, indicating that 1 bit is reserved for the integer portion of the stored number and n bits are reserved for the fractional portion, whereas the processing unit(s) and the register file may use a number format 4.n, indicating that 4 bits are reserved for the integer portion of the stored number and n bits are reserved for the fractional portion.

A 1.n number format in signed two's complement allows numbers in the range -1≤*x*<+1. This means that unity (i.e. the complex number +1 + 0i or the real number +1) cannot be represented. However, there are a number of cases where multiplication by the constant +1 is desirable.

Accordingly, a need exists for a system which permits representation of unity (i.e. the complex number +1 + 0i or the real number +1) in DSPs and similar devices.

US2012/157008 describes an apparatus including a processor, a computer readable storage medium, and a lookup memory. The computer readable storage medium generally contains computer executable instruction that when executed by the processor perform operations involving fixed point multiplication. The lookup memory generally stores values used in the fixed point multiplication. The values stored in the lookup memory are approximated based upon a predetermined value to prevent overflow in the fixed point multiplication. The lookup memory stores fixed point representations of a plurality of roots-of-unity values, wherein one or both of an imaginary part and a real part of said roots-of-unity values are reduced from a respective true magnitude based upon a predetermined value to prevent overflow in a fixed point multiplication. This approximation removes the need to store a representation of unity.

US5422805 relates to a signed arithmetic data processing system which detects a multiply or a multiply-and-accumulate instruction in which a multiplier and a multiplicand each assume their respective maximum negative values. If one or both of the operands is not equal to its maximum negative value, the multiplication proceeds normally, such as in a modified Booth's multiplier/MAC. However, if both operands are equal to their respective maximum negative values, the data processing system substitutes a maximum positive constant for the output of the multiplier/MAC. This substitution allows the result to be expressed with one fewer bits. The resulting error is very small and becomes insignificant in most digital signal processing algorithms, especially those based on fractional, saturation arithmetic. Alternatively, an extra bit of precision may be achieved for a given hardware size.

### Summary of Invention

According to a first aspect of the present invention there is provided signal processing apparatus comprising: a memory unit for storing one or more constant complex values in a two's complement, 1.n fixed point number format, such as to represent a value in the range -1≤x<+1; a mapping unit, configured to map any two's complement, 1.n fixed point, constant complex value stored by the memory unit, having an imaginary component with a value of -1, to a value of unity, wherein the value of unity is a complex number having a real component equal to +1 and an imaginary component equal to 0; and a compute unit configured to receive a constant complex input data value from the mapping unit and to perform a complex arithmetic operation on its input data values.

The mapping unit may be further configured to translate any value of unity to be written to the memory unit into a two's complement, 1.n fixed point number having an imaginary component of -1.

The mapping unit may form part of the memory unit.

The signal processing apparatus may be implemented as one of: one or more integrated circuits; one or more Field Programmable Gate Arrays (FPGAs); one or more Application Specific Integrated Circuits (ASICs); one or more processors; one or more Digital Signal Processors (DSPs), or software running on appropriately configured processing hardware.

### Brief Description of the Drawings

Embodiments of the invention will now be described, strictly by way of example only, with reference to the accompanying drawings, of which:
Figure 1 is a schematic illustration of a signal processing apparatus.
Figure 2 is a schematic illustration of a compute unit of the signal processing apparatus illustrated in Figure 1;
Figure 3 is a schematic illustration of a range of values that can be taken by a constant C when a data memory external to the compute unit of Figure 2 uses a 1.n fixed point number format;
Figure 4 is a schematic illustration of a memory unit used by the signal processing apparatus of Figure 1;
Figure 5 is a schematic illustration of a range of values that can be taken by the constant C when a data memory external to the compute unit of Figure 2 uses a 1.n fixed point number format and a mapping is applied by the compute unit of Figure 2.

### Description of the Embodiments

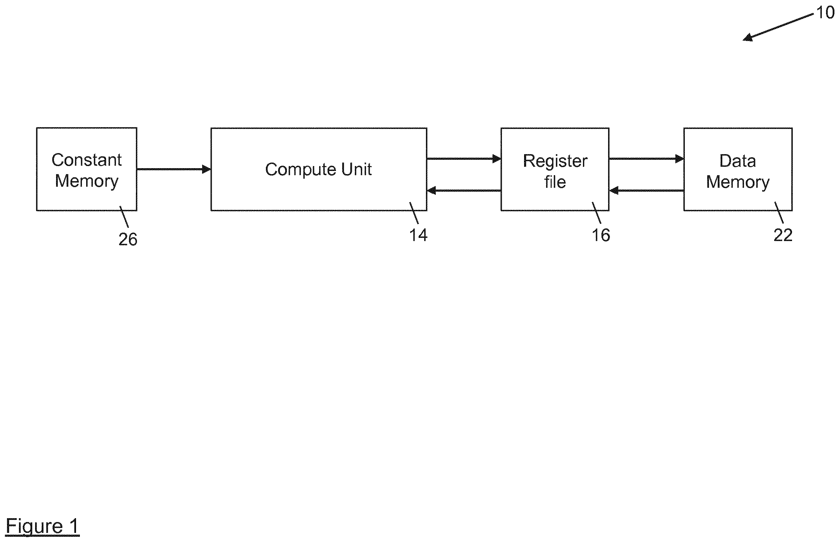

Referring first to Figure 1, a signal processing apparatus is shown generally at 10. To aid understanding of the present invention, the signal processing apparatus 10 is shown and described as comprising a number of functional units. However, it is to be appreciated that the functional units described and shown herein are not necessarily representative of physical components of a physical implementation of the signal processing apparatus.

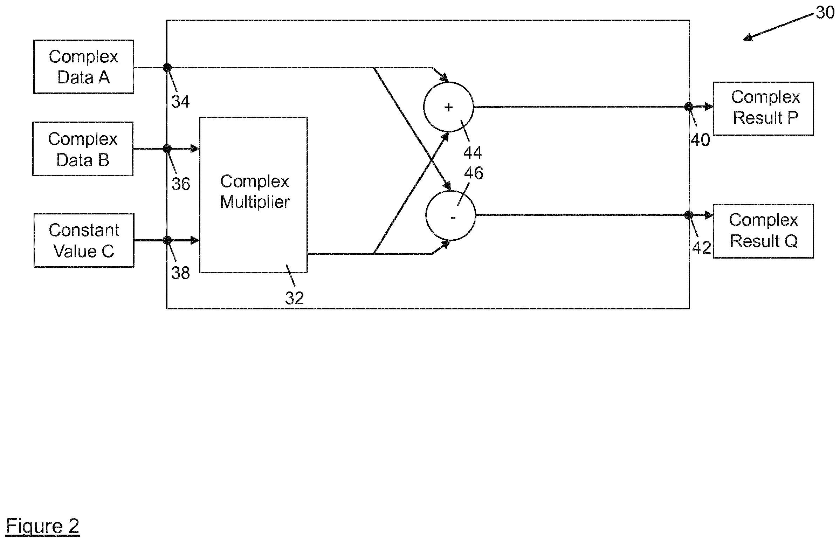

The signal processing apparatus 10 includes a compute unit 14. The compute unit 14 is coupled to a register file 16 for bidirectional communication with the register file 16, to permit transfer of data between the compute unit 14 and the register file 16. The register file contains a plurality of registers. The compute unit 14 will be described in more detail below with reference to Figure 2.

The register file 16 is also coupled to a data memory 22, for bidirectional communication with the data memory 22, to permit data transfer between the register file 16 and the data memory 22. The data memory 22 is used to store computation data (e.g. operands) for, and results of, arithmetic operations performed by the compute unit 14. The data memory 22 may be implemented using a single port memory device, which helps to minimise the cost of the signal processing apparatus 10. The register file 16 is configured to read data from and write data to the data memory 22, and thus acts as a repository for data and results that can be accessed rapidly by the compute unit 14.

The compute unit 14 is also coupled to a constant memory unit 26, which is used to store one or more constant values for use in arithmetic operations performed by the compute unit 14, as will be described in more detail below.

Figure 2 is a schematic illustration of a compute unit (e.g. compute unit 14) of the signal processing apparatus 10. The compute unit (shown generally at 30 in Figure 2) is a complex arithmetic unit, and is based around a complex multiplier 32. The compute unit 30 has first and second complex data inputs 34, 36, a constant data input 38 and first and second complex data outputs 40, 42. The first and second complex data inputs 34, 36 are for receiving first and second complex data values, the constant data input 38 is for receiving a constant input data value from the constant memory unit 26, and the first and second complex data outputs 40, 42 are for outputting the results of complex arithmetic operations performed by the compute unit 30.

The complex multiplier 32 has two inputs, which are connected, respectively, to the second complex data input 36 and to the constant data input 38. The complex multiplier 32 is configured to perform a complex multiplication of the values at the second complex data input 36 and the constant data input 38.

An output of the complex multiplier 32 is connected to both the adder 44 and the subtractor 46. The first complex data input 34 is also connected to both the adder 44 and the subtractor 46.

As can be seen from Figure 2, the outputs of the compute unit are as follows: $Complex Result P = A + B . C$ $Complex Result Q = A - B . C$

In both cases B.C is the complex product of B and C.

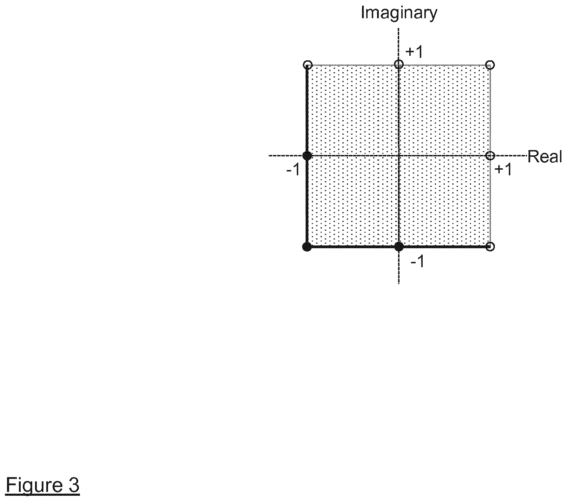

The compute unit 30 uses a different number format than the external data memory 22 or constant memory unit 26. For example, the data memory 22 and constant memory unit 26 may use a fixed point 1.n number format in signed two's complement, which allows numbers in the range -1≤x<+1 to be represented, as illustrated in Figure 3. This means that the constant value C retrieved from the constant memory unit 26 can take a value in that range, but cannot take a value of unity (i.e. the complex number +1 + 0i or the real number +1). However, there are a number of cases where multiplication by the constant +1 is desirable, since this turns the value B.C into the value B. Accordingly, some mechanism for representing the constant value unity (i.e. the complex number +1 + 0i or the real number +1) is required.

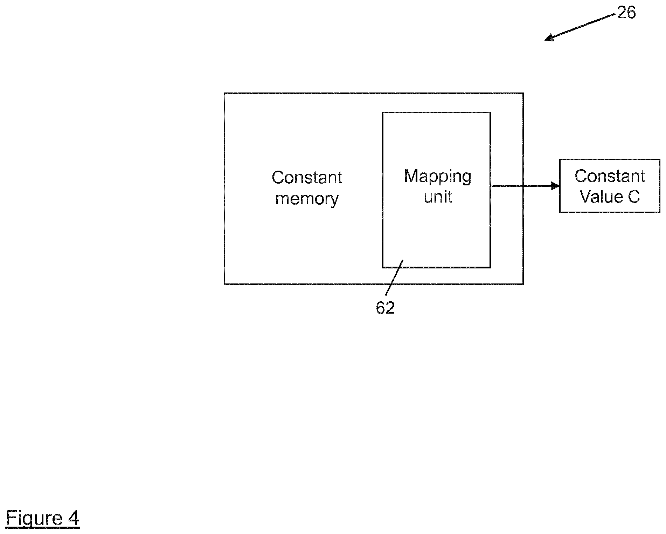

To address this issue, a mapping unit 62 is provided, as shown in Figure 4. The mapping unit 62 in the example shown in Figure 4 forms part of the constant memory unit 26, and is configured to perform a mapping operation on the constant value input via the constant data input 38 to the compute unit 30.

During an operation in which the constant +1 is required by the compute unit 30, a request is made to read the constant value from the constant memory unit 26 and to pass the value read, via the constant data input 38, to the compute unit 30. As indicated above, however, the constant value stored in the constant memory unit 26 may not be exactly unity (i.e. the complex number +1 + 0i or the real number +1), because of the constraints of the fixed point number format used by the constant memory unit 26. The constant value unity may therefore be represented in the constant memory unit 26 by another value. In one example, the constant value unity may be represented in the constant memory unit 26 by a value having an imaginary component that is equal to -1. A single "magic number" having a particular value (e.g. a particular value having an imaginary component of -1 and a real component of -1) may be selected to represent unity in the constant memory, or alternatively, any value having an imaginary component of -1 stored in the constant memory unit 26 may be used to represent unity.

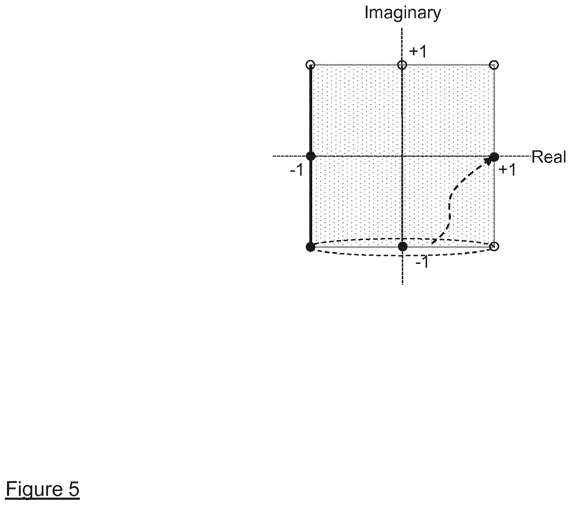

When the request to read the constant value stored in the constant memory unit 26 is received, the value stored in the constant memory unit 26 is read. Instead of passing the value read from the constant memory unit 26 directly to the compute unit 30 via the constant data input 38, however, the value read from the constant memory unit 26 is passed to the mapping unit 62, which translates the value read from the constant memory unit 26 (which, it will be recalled, has an imaginary component of -1) into the constant unity (i.e. the complex number +1 + 0i or the real number +1), as illustrated schematically in Figure 5. The mapping unit 62 then passes the constant unity to the compute unit 30 via the constant data input 38 for use in the required operation. In this way, an operation performed by the signal processing apparatus 10 can use the constant unity, even though it may not be possible to represent unity as a constant in the constant memory unit 26 due to the fixed point number format used by the constant memory unit 26.

The mapping unit 62 performs a further function. Where the constant value unity (i.e. the complex number +1 + 0i or the real number +1) is to be written to the constant memory unit 26, the constraints of the fixed point number format used by the constant memory unit 26 may prevent the value of unity from being correctly written, since if the constant memory unit 26 uses a 1.n fixed point number format, the values stored by the constant memory unit 26 must be in the range -1 ≤ *x* < +1.

In an operation in which the constant value unity is to be written to the constant memory unit 26, a request is made to write the value to the constant memory unit 26. Instead of passing the constant value unity directly to the constant memory unit 26, however, the constant value unity is passed to the mapping unit 62, which translates the constant value unity into a value that can be accurately written to the constant memory unit 26 (e.g. a value in the range -1 ≤ *x* < +1, if the fixed point number format used by the constant memory unit 26 is 1.n) and used to represent the constant value unity. For example, the value of unity may be converted by the mapping unit 62 into the single "magic number" having a particular value as discussed above (e.g. a particular value having an imaginary component of -1 and a real component of -1).

The "magic number" written to the constant memory unit 26 may subsequently be read from the constant memory unit 26, and when that "magic number" is read from the constant memory unit 26, it will automatically be translated into the constant value unity by the mapping unit 62, and subsequently the constant value unity will be passed to the compute unit 30, via the constant data input 38, for use by the compute unit 30 in an operation.

Although in the exemplary embodiment described above the mapping unit 62 forms part of the constant memory unit 26, those skilled in the relevant art will readily appreciate that the mapping unit 62 could be located elsewhere in the signal processing apparatus 10 to achieve the same effect. For example, the mapping unit 62 could form part of the complex multiplier 32, or could be a standalone unit within the compute unit 30.

The mapping unit 62 in the signal processing apparatus 10 facilitates the performance of operations which require multiplication by a constant of unity, thus increasing the range of different operations that can be performed by the signal processing apparatus 10. Thus, it will be appreciated that the signal processing apparatus described herein with reference to the accompanying drawings provides a flexible, versatile and efficient signal processing architecture which is suitable for a great many applications.

The signal processing apparatus 10 has been described herein in terms of functional units. It will be appreciated that the signal processing apparatus 10 may be implemented in many different ways, for example using one or more Application Specific Integrated Circuits (ASICs), Field Programmable Gate Arrays (FPGAs), bespoke Integrated Circuits (ICs) or Digital Signal Processors (DSPs). The signal processing apparatus may also be implemented in software running on appropriately configured processing hardware.

## Claims

1. A signal processing apparatus (10), the signal processing apparatus comprising:
a memory unit (26) for storing one or more constant complex values in a two's complement, 1.n fixed point number format, in which 1 bit is reserved for an integer portion of the number and n bits are reserved for the fractional portion of the number, such as to represent a value in the range -1≤ x <+1;
a mapping unit (62), configured to map any two's complement, 1.n fixed point, constant complex value stored by the memory unit (26), having an imaginary component with a value of -1, to a value of unity, wherein the value of unity is a complex number having a real component equal to +1 and an imaginary component equal to 0; and
a compute unit (30) configured to receive a constant complex input data value from the mapping unit (62) and to perform a complex arithmetic operation on its input data values.

2. A signal processing apparatus according to claim 1 wherein the mapping unit (62) is further configured to translate any value of unity to be written to the memory unit into a two's complement, 1.n fixed point number having an imaginary component of -1.

3. A signal processing apparatus according to any one of the preceding claims wherein the mapping unit forms part of the memory unit.

4. Signal processing apparatus according to any one of the preceding claims wherein the signal processing apparatus is implemented as one of: one or more integrated circuits; one or more Field Programmable Gate Arrays (FPGAs); one or more Application Specific Integrated Circuits (ASICs); one or more processors; one or more Digital Signal Processors (DSPs); or software running on appropriately configured processing hardware

## Patentansprüche

1. Signalverarbeitungsvorrichtung (10), wobei die Signalverarbeitungsvorrichtung Folgendes umfasst:
eine Speichereinheit (26) zum Speichern eines oder mehrerer konstanter komplexer Werte in einem Zweierkomplement, 1.n-Festkomma-Zahlenformat, bei dem 1 Bit für einen ganzzahligen Teil der Zahl und n Bits für den Bruchteil der Zahl reserviert sind, um so einen Wert im Bereich -1≤ x <+1 zu repräsentieren;
eine Zuordnungseinheit (62), die so konfiguriert ist, dass sie einen beliebigen Zweierkomplement-, 1.n-Festkomma-, konstanten, komplexen Wert, der von der Speichereinheit (26) gespeichert wird und eine imaginäre Komponente mit einem Wert von -1 aufweist, einem Wert der Einheit zuordnet, wobei der Wert der Einheit eine komplexe Zahl ist, die eine reelle Komponente gleich +1 und eine imaginäre Komponente gleich 0 aufweist; und
eine Recheneinheit (30), die so konfiguriert ist, dass sie einen konstanten komplexen Eingabedatenwert von der Zuordnungseinheit (62) empfängt und eine komplexe arithmetische Operation mit ihren Eingabedatenwerten ausführt.

2. Signalverarbeitungsvorrichtung nach Anspruch 1, wobei die Zuordnungseinheit (62) ferner so konfiguriert ist, dass sie jeden in die Speichereinheit zu schreibenden Wert der Einheit in eine Zweierkomplement-, 1.n-Festkommazahl mit einer imaginären Komponente von -1 übersetzt.

3. Signalverarbeitungsvorrichtung nach einem der vorhergehenden Ansprüche, wobei die Zuordnungseinheit einen Teil der Speichereinheit bildet.

4. Signalverarbeitungsvorrichtung nach einem der vorhergehenden Ansprüche, wobei die Signalverarbeitungsvorrichtung als eine der Folgenden implementiert ist:
eine oder mehrere integrierte Schaltungen;
ein oder mehrere Field Programmable Gate Arrays (FPGAs);
eine oder mehrere anwendungsspezifische integrierte Schaltungen (ASICs);
ein oder mehrere Prozessoren;
ein oder mehrere digitale Signalprozessoren (DSPs); oder
Software, die auf entsprechend konfigurierter Verarbeitungshardware ausgeführt wird.

## Revendications

1. Appareil de traitement des signaux (10), l'appareil de traitement des signaux comprenant :
une unité de mémoire (26) destinée à mémoriser une ou plusieurs valeurs complexes constantes en un en format numérique à point fixe 1.n, complément à deux, dans lequel 1 bit est réservé pour une partie entière du nombre et n bits sont réservés pour la partie fractionnaire du nombre, de manière à représenter une valeur dans la plage -1 ≤ *x* < +1 ;
une unité de mappage (62), configurée pour mapper une quelconque valeur complexe constante à point fixe 1.n, complément à deux, mémorisée par l'unité de mémoire (26), possédant une composante imaginaire comportant une valeur de -1, à une valeur d'unité, dans laquelle la valeur d'unité est un nombre complexe possédant une composante réelle égale à +1 et une composante imaginaire égale à 0 ; et
une unité de calcul (30) configurée pour recevoir une valeur de données d'entrée complexe constante depuis l'unité de mappage (62) et pour effectuer une opération arithmétique complexe sur ses valeurs de données d'entrée.

2. Appareil de traitement des signaux selon la revendication 1, dans lequel l'unité de mappage (62) est configurée en outre pour traduire une quelconque valeur d'unité à écrire dans l'unité de mémoire en un nombre à point fixe 1.n, complément à deux, possédant une composante imaginaire de -1.

3. Appareil de traitement des signaux selon l'une quelconque des revendications précédentes, dans lequel l'unité de mappage fait partie de l'unité de mémoire.

4. Appareil de traitement des signaux selon l'une quelconque des revendications précédentes, dans lequel l'appareil de traitement des signaux est mise en œuvre comme l'un parmi :
un ou plusieurs circuits intégrés ;
un ou plusieurs réseaux de portes programmables (FPGA) ;
un ou plusieurs circuits intégrés spécifiques à une application (ASIC) ;
un ou plusieurs processeurs ;
un ou plusieurs processeurs de signaux numériques (DSP) ; ou
un logiciel s'exécutant sur du matériel de traitement configuré correctement.
